Europäisches Patentamt

European Patent Office

Office européen des brevets

(19)

(11) Numéro de publication : **0 064 427**
**B1**

(12)

# FASCICULE DE BREVET EUROPÉEN

(45) Date de publication du fascicule du brevet :
18.09.85

(21) Numéro de dépôt : 82400572.2

(22) Date de dépôt : 30.03.82

(51) Int. Cl.⁴ : **F 16 K 17/19, F 16 K 15/14,
B 65 D 51/00**

(54) **Clapet de régulation de pression.**

(30) Priorité : 10.04.81 FR 8107203

(43) Date de publication de la demande :
10.11.82 Bulletin 82/45

(45) Mention de la délivrance du brevet :
18.09.85 Bulletin 85/38

(84) Etats contractants désignés :
DE GB IT SE

(56) Documents cités :
DE-A- 1 450 663
FR-A- 2 290 618
FR-A- 2 497 499
US-A- 2 328 382
US-A- 2 622 762
US-A- 2 925 090
US-A- 3 138 173
US-A- 4 165 816

(73) Titulaire : **COMPAGNIE INDUSTRIELLE DE MECANIS-
MES en abrégé C.I.M. Société dite:**
**6, Rue Barbès**
**F-92302 Levallois-Perret (FR)**

(72) Inventeur : **Canadas, Jean-Christophe**
**28 Rue des Etats-Unis**
**88200 Remiremont (FR)**
Inventeur : **Steiner, Michel**
**2 Rue du Canton**
**88200 Remiremont (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

La présente invention est relative à un clapet de régulation de pression destiné à maintenir la pression d'une enceinte entre deux valeurs prédéterminées, correspondant au préambule de la revendication 1 et connu du US-A-3 138 173. Elle s'applique en particulier à l'équipement des bouchons de réservoir à carburant des véhicules automobiles.

Il est souvent souhaitable d'interdire aux gaz contenus dans une enceinte de posséder une surpression et une dépression excessives par rapport à l'atmosphère environnante. En particulier, une surpression dans un réservoir d'essence, due à une élévation de température présente un risque d'explosion, tandis qu'une dépression dans le réservoir, due à une baisse du niveau du carburant, risque de conduire à une mauvaise alimentation du carburateur.

On a proposé diverses solutions pour assurer une telle régulation de pression au niveau du bouchon du réservoir. Mais ces solutions se sont révélées trop compliquées à réaliser et n'ont pas été adoptées industriellement, ou bien (US-A-3 138 173) ne permettent pas d'obtenir des seuils de pression d'ouverture du clapet qui soient à la fois faibles et reproductibles avec précision.

L'invention, telle qu'elle est caractérisée dans la revendication 1, a pour but de fournir un clapet de régulation de pression de conception particulièrement simple et économique permettant de remplir cette condition sur les seuils d'ouverture.

L'assemblage d'un tel clapet est très facile, et les seuils de dépression et de surpression provoquant l'ouverture du clapet peuvent être abaissés à des valeurs extrêmement faibles, notamment grâce à la surface importante de l'aile périphérique, tout en assurant une excellente étanchéité entre ces deux seuils.

L'invention a également pour objet un bouchon de réservoir à carburant d'automobile équipé d'un clapet tel que défini ci-dessus. Des modes particuliers de réalisation de l'invention apparaissent dans les revendications dépendantes.

L'invention est exposée ci-après plus en détail à l'aide du dessin annexé, qui en représente seulement un mode d'exécution. Sur ce dessin :

La figure 1 est une vue en coupe longitudinale d'un clapet suivant l'invention, au repos ;

les figures 2 et 3 sont des vues analogues du clapet, respectivement en cas de dépression et en cas de surpression dans l'enceinte ;

la figure 4 est une vue en coupe longitudinale d'un bouchon de réservoir équipé du clapet des figures 1 à 3.

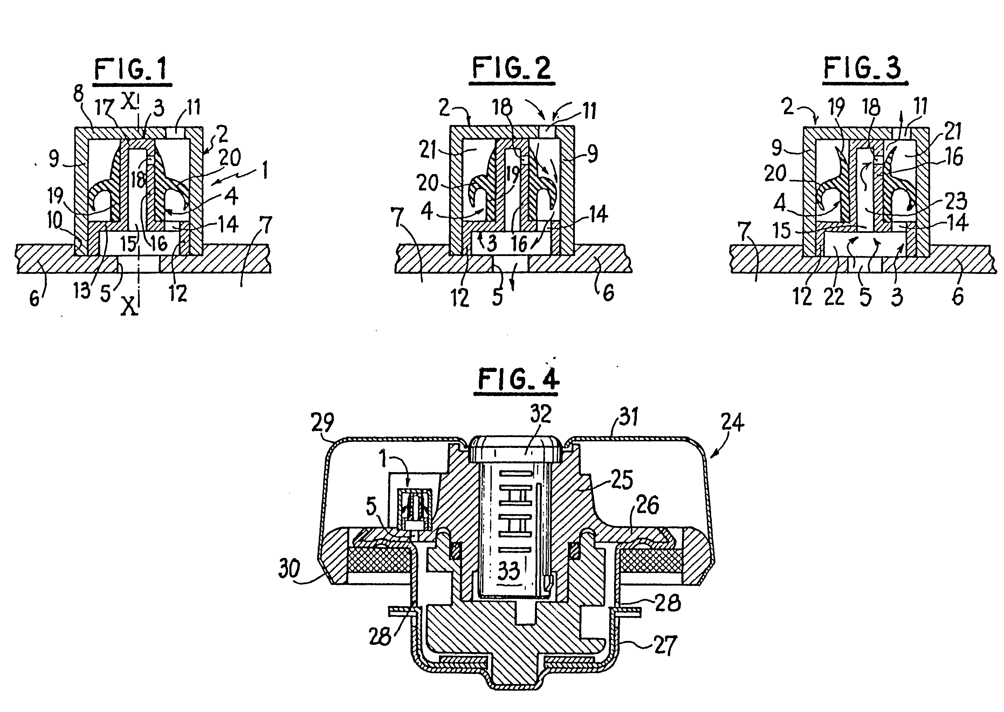

Le clapet 1 représenté aux figures 1 à 3 est constitué de trois pièces : un corps extérieur rigide 2, une cloison rigide 3 et une manchette élastique 4 en caoutchouc. Il est destiné à être fixé autour d'un orifice 5 prévu dans une paroi 6 d'une enceinte 7 contenant un gaz dont la pression est susceptible de varier. Le clapet 1 a une forme générale de révolution autour de l'axe X-X de l'orifice 5, que l'on supposera vertical.

Le corps 2 a la forme d'une cuvette renversée ou d'une cloche à fond plat 8 et à paroi latérale cylindrique 9. Le bord de cette dernière est emmanché et fixé à joint étanche, par exemple par soudure par ultrasons, dans un contre-alésage 10 prévu à l'extrémité supérieure de l'orifice 5. Le fond 8 est percé d'une couronne de trous 11.

La cloison 3 a en section longitudinale une forme générale en T renversé. Elle comporte une base creuse 12 en forme de cuvette renversée emmanchée dans la région inférieure du corps 2, son bord inférieur se trouvant sensiblement dans le même plan que celui de ce corps. Le fond 13 de la base 12 présente une couronne de trous 14 et un trou central 15. De la périphérie de ce dernier part vers le haut une douille tubulaire borgne 16 dont le fond 17 bute contre le fond 8 du corps 2. Un trou radial 18 traverse la douille 16 près du fond 17.

La manchette élastique 4 a une section longitudinale en forme générale de lys. Elle comporte un fût tubulaire 19 dont la longueur est à peu près égale à celle de la douille 16 et qui est enfilé à serrage sur cette dernière. L'extrémité supérieure du fût 19 est effilée. D'un point intermédiaire de ce fût, situé entre le niveau du trou 18 et celui du fond horizontal 13, part à peu près radialement une saillie ou aile annulaire 20 venue de moulage avec le fût 19. Cette aile a une demi-section en forme approximative de quart de cercle recourbé vers le bas.

Lorsque la pression de gaz régnant dans l'enceinte est à peu près égale à la pression $P_0$ extérieure à l'enceinte, c'est-à-dire habituellement à la pression atmosphérique, le clapet se trouve dans l'état représenté à la figure 1 : la partie supérieure du fût 19 s'applique élastiquement sur l'extrémité radialement extérieure du trou 18, et l'aile 20 s'applique élastiquement avec effet de lèvre, par sa face supérieure/extérieure, contre la face intérieure de la paroi latérale du corps 2. Aucune communication n'existe donc entre l'enceinte 7 et l'atmosphère extérieure.

Si la pression régnant dans l'enceinte 7 diminue jusqu'à une certaine valeur $P_1 < P_0$ déterminée par la souplesse de l'aile 20, celle-ci cède et se décolle de la paroi 9 du corps 2, comme illustré à la figure 2, tandis que le fût 19 s'applique plus fermement sur le trou 18. De l'air extérieur peut alors pénétrer dans l'enceinte 7 par les trous 11, l'espace annulaire 21 du corps 2 entourant la manchette 3, les trous 14 et l'orifice 5. Dès que la pression intérieure de l'enceinte est remontée jusqu'à la valeur $P_1$, l'aile 20 s'applique de nouveau à joint étanche sur la paroi 9.

Si au contraire la pression qui règne dans l'enceinte 7 augmente jusqu'à une certaine valeur $P_2 > P_0$ déterminée par la souplesse de la partie supérieure effilée du fût 19, celle-ci cède et se décolle de la douille 16 en découvrant le trou 18, comme représenté à la figure 3, tandis que l'aile 20 s'applique plus fermement contre la paroi 9 du corps 2. Du gaz peut alors s'échapper de l'enceinte 7 dans l'atmosphère par l'orifice 5, l'espace intérieur 22 de la base 12, le trou 15, l'espace intérieur 23 de la douille 16, le trou 18, l'espace annulaire 21 et les trous 11. Dès que la pression intérieure de l'enceinte est redescendue à la valeur $P_2$, le fût 19 s'applique de nouveau sur le trou 18 en l'obturant à joint étanche.

On remarque que le clapet 1 convient dans le cas où l'enceinte 7 est un réservoir de liquide, puisque le liquide, n'étant pas sous pression, ne risque en aucun cas de sortir du réservoir à travers ce clapet. On choisit bien entendu dans chaque cas, pour les trois pièces 1 à 3 constituant le clapet 1, des matériaux inertes vis-à-vis du gaz et éventuellement du liquide contenu dans l'enceinte 7.

La figure 4 montre l'application du clapet 1 à un bouchon 24 de réservoir à carburant de véhicule automobile tel que décrit dans la demande de brevet FR-A-2 497 499. Pour les besoins de la présente description, il suffit d'indiquer que le corps 25 du bouchon 24 possède une collerette horizontale 26 sur la face inférieure de laquelle est fixée une cuvette en tôle 27 percée de deux fenêtres latérales 28. L'orifice 5 est percé dans la région radialement intérieure de la collerette 26 et communique, en service, avec l'intérieur du réservoir (non représenté) par l'espace intérieur de la cuvette 27 et les fenêtres 28. Le clapet 1 assure ainsi le maintien du réservoir entre les deux pressions $P_1 < P_0$ et $P_2 > P_0$. De plus, il est rendu inaccessible par le capuchon supérieur 29 du bouchon, dont la périphérie inférieure 30 est sertie sur le pourtour du corps 25 et dont la surface supérieure 31 rejoint avec jeu l'extrémité supérieure de ce corps et la tête 32 du barillet de verrouillage 33.

On comprend qu'on peut facilement ajouter le sous-ensemble constitué par le clapet 1 à divers types de bouchons de réservoir existants sans pour cela devoir modifier de façon notable ces bouchons ni leurs chaînes de fabrication.

**Revendications**

1. Clapet de régularisation de pression, notamment pour bouchon de réservoir à carburant, destiné à maintenir la pression d'une enceinte entre deux valeurs prédéterminées, qui comprend un corps tubulaire (2) destiné à être monté sur un orifice (5) d'une paroi (6) de l'enceinte (7), une cloison (3) qui divise ce corps en une première chambre (22-23) communiquant avec l'orifice et une deuxième chambre (21) présentant un passage (11) de communication avec l'atmosphère extérieure, cette cloison (3) comprenant une plaque (13) transversale au corps qui présente un trou central (15) duquel fait saillie un support cylindrique (16), au moins deux ouvertures (14, 18) de mise en communication des deux chambres et une manchette élastique (4) enfilée à serrage sur le support cylindrique (16), caractérisé en ce que le corps (2) a la forme d'une cloche, en ce que le support cylindrique a la forme d'une douille borgne (16) sur le trou central (15) et d'un côté de la plaque transversale (13), en ce qu'au moins une ouverture (14) est ménagée dans la plaque transversale (13) et une ouverture radiale (18) dans la douille borgne (16), en ce que la manchette élastique (4) présente entre la plaque transversale (13) et l'ouverture radiale (18) de la douille borgne (16) une aile périphérique (20) dont la demi-section est recourbée vers la plaque transversale (13) et qui s'applique dans sa position de repos sur tout son pourtour sur la paroi cylindrique du corps (2) dans les cas de pression entre les deux valeurs prédéterminées et de surpression dans l'enceinte, mais l'aile périphérique (20) s'éloigne de la paroi du corps (2) en cas de dépression dans l'enceinte et en ce que la manchette élastique (4) présente au niveau de l'ouverture radiale (18) une extrémité qui est effilée de sorte qu'elle s'éloigne de ladite ouverture radiale (18) en cas de surpression dans l'enceinte.

2. Clapet suivant la revendication 1, caractérisé en ce que le corps (2), la douille (16) et la manchette (4) sont dans l'ensemble de révolution et coaxiaux.

3. Clapet suivant l'une des revendications 1 et 2, caractérisé en ce que la plaque (13) comporte un rebord cylindrique emmanché dans le corps.

4. Clapet suivant la revendication 3, caractérisé en ce que le fond (17) de la douille (16) bute contre le fond (8) du corps (2).

5. Bouchon de réservoir à carburant d'automobile, caractérisé en ce qu'il est muni d'un clapet (1) suivant l'une quelconque des revendications 1 à 4.

6. Bouchon suivant la revendication 5, caractérisé en ce que le clapet (1) est fixé autour d'un orifice (5) percé dans la collerette extérieure (26) du corps (25) du bouchon (24).

**Claims**

1. A pressure equalizing valve, in particular for a fuel tank cap, adapted to maintain the pressure in an enclosure between two predetermined values, which comprises a tubular body (2) adapted to be mounted on an orifice (5) of a wall (6) of the enclosure (7), a partition (3) which divides this body into a first chamber (22-23) communicating with the orifice and a second chamber (21) having a passage (11) communicating with the exterior atmosphere, this partition (3) comprising a plate (13) which extends transversely of the body and has a central opening (15) from which projects a cylindrical support (16), at least two openings (14, 18) putting the two chambers into communication with each other, and an elastically yieldable sleeve (4) mounted in a gripping manner on the cylindrical support (16), characterised in that the body (2) has a bell shape, the cylindrical support has the shape of a blind socket (16) on the central opening (15) and on one side of the transverse plate (13), at least one opening (14) is provided in the transverse plate (13) and a radial opening (18) is provided in the blind socket, the elastically yieldable sleeve (4) has between the transverse plate (13) and the radial opening (18) of the blind socket (16) a peripheral wing (20) whose semi-section is bent toward the transverse plate (13) and which is applied in its position of rest throughout its periphery on the cylindrical wall of the body (2) in the cases of pressure between the two predetermined values and overpressure in the enclosure, but the peripheral wing (20) moves away from the wall of the body (2) in the case of depression in the enclosure, the elastically yieldable sleeve (4) has in the region of the radial opening (18) a tapering end so that it moves away from said radial opening (18) in the case of overpressure in the enclosure.

2. A valve according to claim 1, characterised in that the body (2), the socket (16) and the sleeve (4) are generally of revolution and coaxial.

3. A valve according to one of the claims 1 and 2, characterised in that the plate (13) has a cylindrical flange fitted in the body.

4. A valve according to claim 3, characterised in that the end wall (17) of the socket (16) abuts against the end wall (8) of the body (2).

5. A fuel tank cap for a motor vehicle, characterised in that it is provided with a valve (1) according to any one of the claims 1 to 4.

6. A cap according to claim 5, characterised in that the valve (1) is fixed around an orifice (5) provided in the outer flange (26) of the body (25) of the cap (24).

**Patentansprüche**

1. Druckregelventil zum Halten des Druckes in einem Raum zwischen zwei bestimmten Werten, insbesondere für Kraftstofftankdeckel, welches einen rohrförmigen Körper (2) zur Anbringung auf einer Öffnung (5) einer Wand (6) des Raumes (7), eine Trennwand (3), welche diesen Körper in eine mit der Öffnung in Verbindung stehende erste Kammer (22-23) und eine einen Durchtritt (11) zur Verbindung mit Außenatmosphäre aufweisende zweite Kammer (21) unterteilt, wobei diese Trennwand (3) eine quer zum Körper verlaufende Platte (13) umfaßt, welche ein Mittelloch (15) aufweist, über welches ein zylindrischer Träger (16) vorspringt, wenigstens zwei Öffnungen (14, 18) zur Verbindung der beiden Kammern und eine unter Pressung auf den zylindrischen Träger (16) aufgezogene elastische Manschette (4) umfaßt, dadurch gekennzeichnet, daß der Körper (2) glockenförmig ist, daß der zylindrische Träger die Form einer Grundbuchse (16) auf dem Mittelloch (15) und einer Seite der Querplatte (13) hat, daß wenigstens eine Öffnung (14) in der Querplatte (13) und eine radiale Öffnung (18) in der Grund-buchse (16) ausgebildet ist, daß die elastische Manschette (4) zwischen der Querplatte (13) und der radialen Öffnung (18) der Grundbuchse (16) einen Umfangsflügel (20) aufweist, dessen Halbschnitt zur Querplatte (13) hin gekrümmt ist und der sich in seiner Ruhestellung in den Fällen eines zwischen den beiden bestimmten Werten liegenden Druckes und eines Überdrucks in dem Raum über seinen gesamten äußeren Umfang gegen die zylindrische Wand des Körpers (2) legt, während sich der Umfangsflügel (20) im Falle eines Unterdrucks in dem Raum von der Wand des Körpers (2) entfernt, und daß die elastische Manschette (4) auf Höhe der radialen Öffnung (18) ein Ende aufweist, das so aufgezogen ist, daß es sich von der radialen Öffnung (18) im Falle eines Überdrucks in den Raum entfernt.

2. Ventil nach Anspruch 1, dadurch gekennzeichnet, daß der Körper (2), die Buchse (16) und die Manschette (4) insgesamt Rotationskörper und koaxial sind.

3. Ventil nach irgendeinem der Ansprüche 1 und 2, dadurch gekennzeichnet, daß die Platte (13) einen in den Körper eingesteckten zylindrischen Rand aufweist.

4. Ventil nach Anspruch 3, dadurch gekennzeichnet, daß der Boden (17) der Buchse (16) gegen den Boden (8) des Körpers (2) anstößt.

5. Deckel für den Kraftstofftank eines Kraftfahrzeugs, dadurch gekennzeichnet, daß er mit einem Ventil (1) nach irgendeinem der Ansprüche 1 bis 4 versehen ist.

6. Deckel nach Anspruch 5, dadurch gekennzeichnet, daß das Ventil (1) um eine Öffnung (5) angebracht ist, die den äußeren Bund (26) des Körpers (25) des Deckels (24) durchsetzt.

FIG.1  FIG.2  FIG.3  FIG.4